# EUROPEAN PATENT SPECIFICATION

(11) **EP 3 306 171 B1**
(45) Date of publication and mention of the grant of the patent: **04.09.2019**
(21) Application number: 17182873.4
(22) Date of filing: 24.07.2017
(51) Int. Cl.: F16M 11/04, F16M 11/12, F16M 11/20, F16M 13/02

(54) **HANDS-FREE DUAL CLAMP DEVICE**
HANDFREIEN DOPPELKLEMMVORRICHTUNG
DISPOSITIF DE PINCE DOUBLE MAINS LIBRES

(30) Priority: 07.10.2016 TW 105132497
(43) Date of publication of application: 11.04.2018
(73) Proprietor: Chang, Michael Chau-Lun, New Taipei City 251 (TW)
(72) Inventor: Chang, Michael Chau-Lun, New Taipei City 251 (TW)
(74) Representative: Lang, Christian

(56) References cited:
- CN-A- 102 167 108
- US-A- 2 324 803
- US-A- 4 799 639
- US-A1- 2015 267 863

## Description

### BACKGROUND OF THE INVENTION

### 1. FIELD OF THE INVENTION

The present invention relates to a clamp device and particularly to a hands-free dual clamp device, which is readily connectable and is angle-adjustable for securely clamping two objects.

### 2. RELATED ART

With the rapid development and widely application of wireless communication, people are deeply engaged with mobile devices at anytime or any places. Such mobile devices, for example, can be smart phones, tablets, or digital cameras. Unfortunately, in some circumstances, users are hard to hold their mobile devices. Therefore, an external auxiliary fixing tool is used to help users support the mobile devices.

Conventional fixing apparatus for holding or fixing mobile devices are designed to be conveniently carried and generally has two opposite ends, wherein one end is to be held by users, and the other end is utilized to hold a mobile device, such as a smart phone. Usually, users can use such auxiliary fixing apparatus for taking a selfie. Namely, one hand is to hold an extendable rod of the fixing apparatus so that the mobile device held by the fixing apparatus is capable of facing users for the purpose of taking a photo. However, such kind of fixing apparatus is needed to be held by users, which results in a limited distance for taking a picture. Consequently, conventional fixing apparatus are being improved to be capable of being positioned without hands to hold. Specifically, the improved fixing apparatus has two ends to hold objects, wherein one end is equipped with a holding frame to hold a mobile device, and the other end is to be fixed to an external object for positioning the fixing apparatus so that users do not need to personally hold the fixing apparatus. Though such an improved fixing apparatus seemed to solve the problem of hand-held inconvenience, there is only one end of the conventional fixing apparatus can be used to hold mobile device, while the other end is configured to be fixed onto an object. Moreover, those functional ends are not replaceable with each other, whereby limiting the range of objects to be held or fixed. From document US 2015/267863 A1 another conventional fixing apparatus for holding mobile devices is known, which includes an extension rod having a rod body whose two ends are detachably connected to a positioning frame and a securing member, wherein the positioning frame is adjustable to hold a mobile device and the securing member is configured to secure the rod body and the positioning frame onto an external object **having** a rod-shaped or planar structure.

US 2015/0267863 A1 discloses an extension rod device working with a fixer for handheld, portable, mobile devices. The fixer is portable and serves to suspend a mobile electronic device, such as a mobile phone, a portable game player, an electronic book, a GPS device or a tablet computer, and the extension rod device is designed to work with such a fixer.

### SUMMARY OF THE INVENTION

Accordingly, an object of the present invention is to provide a hands-free dual clamp device being capable of readily securely two objects so as to allow users to be free of holding the device and the objects.

Another object of the present invention is to provide a hands-free dual clamp device being capable of clamping objects of various profiles, and are readily assembled or detachable for being carried or replaced with different types or functions of components.

To achieve the above-mentioned objects, the hands-free dual clamp device comprises two clamping units, each of the clamping units comprising an upper clamping body, a lower clamping body, a mating portion disposed on one end of the upper clamping body, and a shaft module, one end of the lower clamping body pivotally connected to the one end of the upper clamping body. The shaft module is spirally inserted through the upper and lower clamping bodies and is rotatable, so as to enable the upper and lower clamping bodies to be adjustable at angles with respect to each other and cooperatively form a clamping space for clamping an external object. A connecting module comprises at least a connecting unit having two opposite end portions, one of the end portions provided with a first connecting element, the other end portion provided with a second connecting element, the first connecting element connected to the mating portion of one of the clamping units, and the second connecting element connected to the mating portions of the other one of the clamping units, so that the two clamping units are linked together with the connecting module.

In one aspect of the present invention, the upper clamping body and the lower clamping body respectively define a root portion located adjacent to the mating portion, the shaft module comprises an outer shaft, an inner shaft, and two sleeve pieces respectively disposed in the root portions of the upper and lower clamping bodies, the outer and inner shafts respectively form threads, the outer shaft is spirally connected with the sleeve piece of the upper clamping body, and a part of the inner shaft is spirally engaged into the outer shaft, and another part of the inner shaft is spirally connected with the sleeve piece of the lower clamping body.

In another aspect of the present invention, the threads of the outer shaft spiral in a direction opposite to that of the inner shaft, and the inner shaft is coaxially rotatable in the sleeve piece of the lower clamping body in conjunction with rotation of the outer shaft.

In another aspect of the present invention, the sleeve pieces of the upper and lower clamping bodies are rotatable in the root portions, so that the outer shaft and the inner shaft are capable of swinging with respect to the sleeve pieces when the outer shaft rotates, whereby adjusting a size of the clamping space between the upper and lower clamping bodies.

The hands-free dual clamp device of the present invention utilizes the connecting module to detachably connect two clamping units and for clamping external objects and (e.g. smart phones, microphones, hangers or boards), where the clamping units are capable of rotating at various angles so as to enable users to use mobile electronic devices to watch videos without holding by hands, whereby effectively overcoming the drawbacks of conventional fixing devices which are needed to be hand-held. Furthermore, the claw-type clamping units are capable of being adjusted by the shaft module to readily adjust the size of the clamping space for various shapes of objects and to apply secure clamping force, whereby successfully overcoming the drawbacks of conventional fixing devices that utilize springs to provide clamping force which renders the clamping force insufficient, and are incapable of clamping round or irregular shapes of objects.

### BRIEF DESCRIPTION OF THE DRAWINGS

FIG. 1 is a perspective exploded view of a hands-free dual clamp device in accordance with a first embodiment of the present invention;
FIG. 2 is a perspective assembly view of FIG. 1;
FIG. 3 is a perspective exploded view of a clamping unit of the present invention;
FIG. 4 is a schematic side sectional view of the clamping unit;
FIG. 5 is a schematic perspective view showing the hands-free dual clamp device in a state of use;
FIG. 6 is a schematic perspective view showing an embodiment of a connecting module of the present invention;
FIG. 7 is a perspective assembly view of a hands-free dual clamp device in accordance with a second embodiment of the present invention;
FIG. 8 is a perspective exploded view of FIG. 7;
FIG. 9 is a schematic perspective view showing the hands-free dual clamp device of FIG. 7 in a state of use;
FIG. 10 is a schematic perspective view showing another embodiment of the connecting module of the present invention;
FIG. 11 is a perspective assembly view of a hands-free dual clamp device in accordance with a third embodiment of the present invention;
FIG. 12 is a schematic perspective view showing another embodiment of the clamping unit of the present invention;
FIG. 13 is a schematic perspective view showing the hands-free dual clamp device in another state of use; and
FIG. 14 is a schematic perspective view showing the hands-free dual clamp device in another state of use.

### DESCRIPTION OF THE PREFERRED EMBODIMENTS

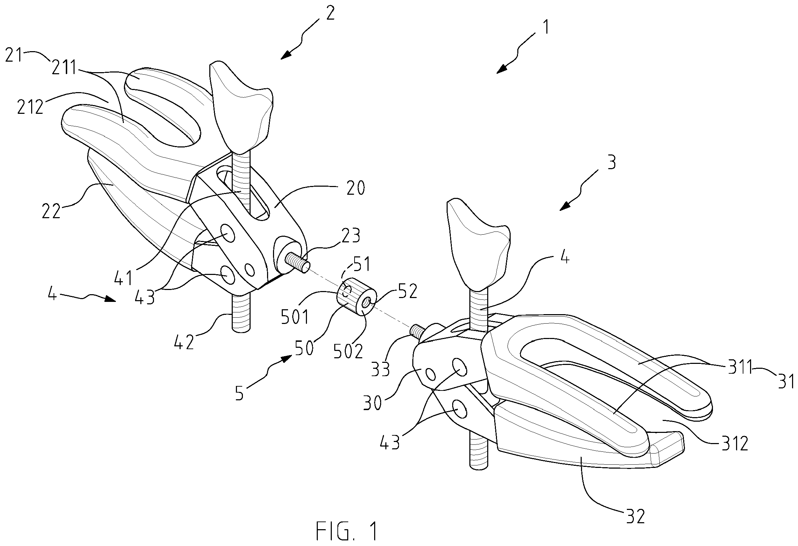

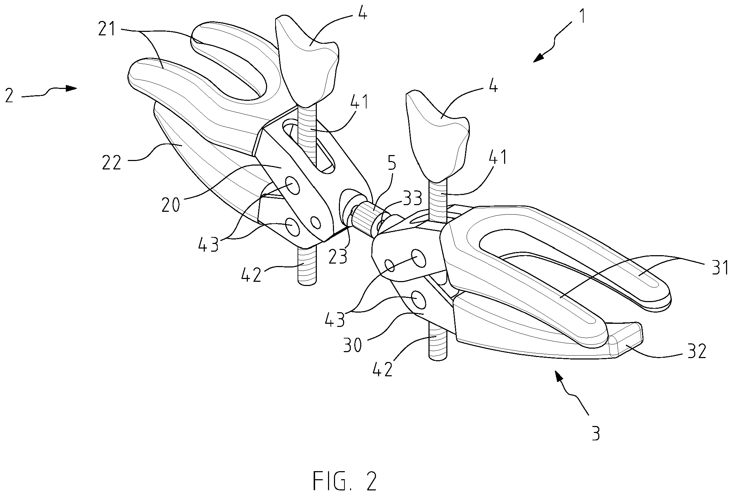

Referring to FIGS. 1 to 5 showing a first embodiment of a hands-free dual clamp device of the present invention, the hands-free dual clamp device 1 comprises two clamping units 2 and 3, and a connecting module 5. Each of the clamping units 2 and 3 comprises an upper clamping body 21 and 31, a lower clamping body 22 and 32, a mating portion 23 and 33 disposed on one end of the upper clamping body 21 and 31, and a shaft module 4. One end of the lower clamping body 22 and 32 is pivotally connected to the one end of the upper clamping body 21 and 31. In this embodiment, the upper clamping body 21 and 31 and the lower clamping bodies 22 and 32 respectively defines a root portion 20 and 30 thereon located adjacent to the mating portion 23 and 33. The upper and lower clamping bodies 21, 31, 22 and 32 respective have a curved configuration in a side sectional view so as to facilitate the clamping of objects having polygon or curved profiles. Furthermore, the upper and lower clamping bodies 21, 31, 22 and 32 are respectively covered with a soft or rubber material in order to enhance the clamping strength.

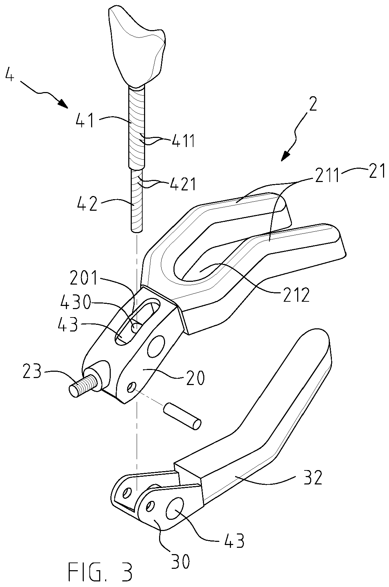

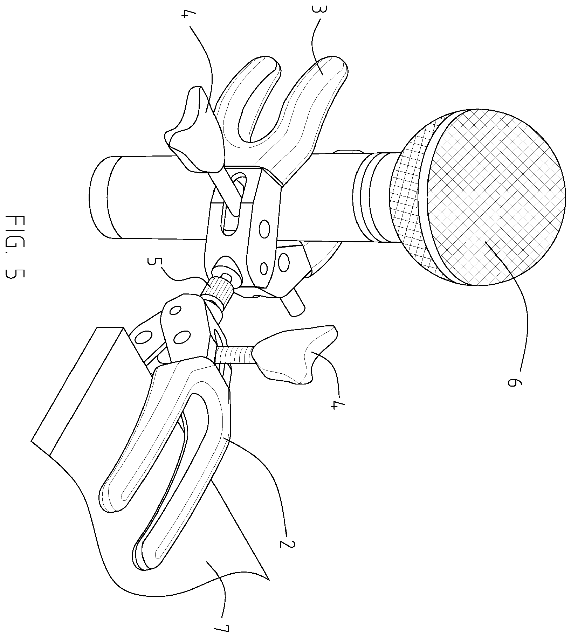

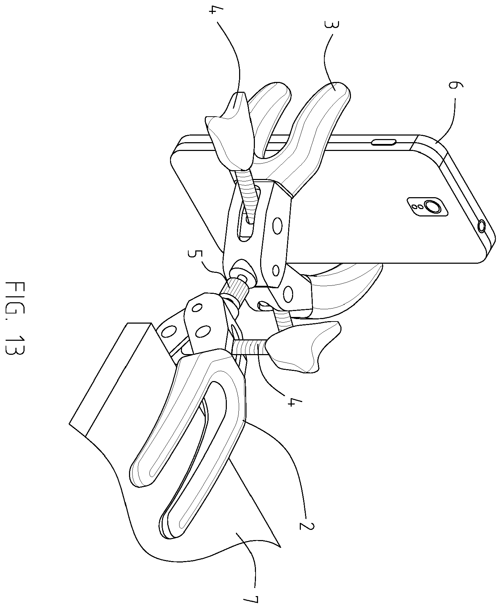

Referring to FIG. 3, the shaft module 4 is spirally inserted through the upper and lower clamping bodies 21, 31, 22 and 32 and is rotatable, so as to enable the upper and lower clamping bodies 21, 31, 22 and 32 to be adjustable at angles with respect to each other and to cooperatively form a clamping space for clamping external objects 6 and 7 (as shown in FIGS. 5 and 13). The shaft module 4 comprises an outer shaft 41, an inner shaft 42, and two sleeve pieces 43 respectively and transversally disposed in the root portions 20 and 30. Each of the sleeve pieces 43 has a though hole 430 at a middle thereof. The outer and inner shafts 41 and 42 respectively form threads 411 and 421. The outer shaft 41 is spirally connected with the through hole 430 of the sleeve piece 43 of the upper clamping body 21 and 31, and the outer shaft 41 is hollow therein and open at one end thereof. A part of the inner shaft 42 is spirally engaged into the outer shaft 41, and another part of the inner shaft 42 is spirally connected with the through hole 430 of the sleeve piece 43 of the lower clamping body 22 and 32. A top of the outer shaft 41 is further provided with a tab (not labeled) for being manipulated to rotate the outer shaft. Particularly, the threads 411 of the outer shaft 41 spiral in a direction opposite to the threads 421 of the inner shaft 42.

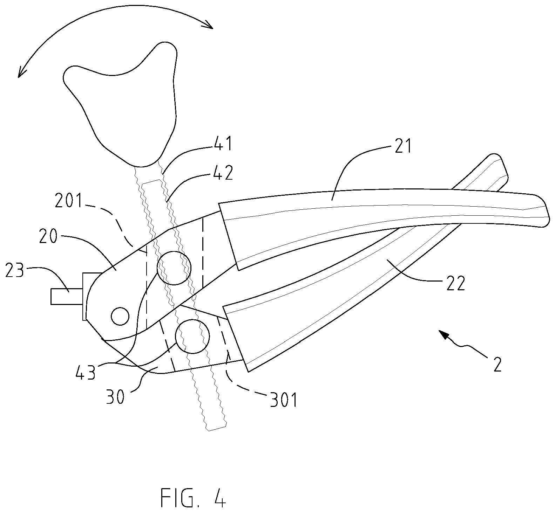

As shown in FIGS. 1 and 3, each of the upper clamping bodies 21 and 31 of the two clamping units 2 and 3 comprises two claws 211 and 311 extending from the root portion 20 and 30. The two claws 211 and 311 are spaced apart to form an interval 212 and 312. The corresponding lower clamping body 22 and 32 has a claw-like shape substantially symmetrical to the claws 211 and 311, and is capable of being adjusted by the shaft module 4 to move into the interval 212 and 312 (as shown in FIG. 4).

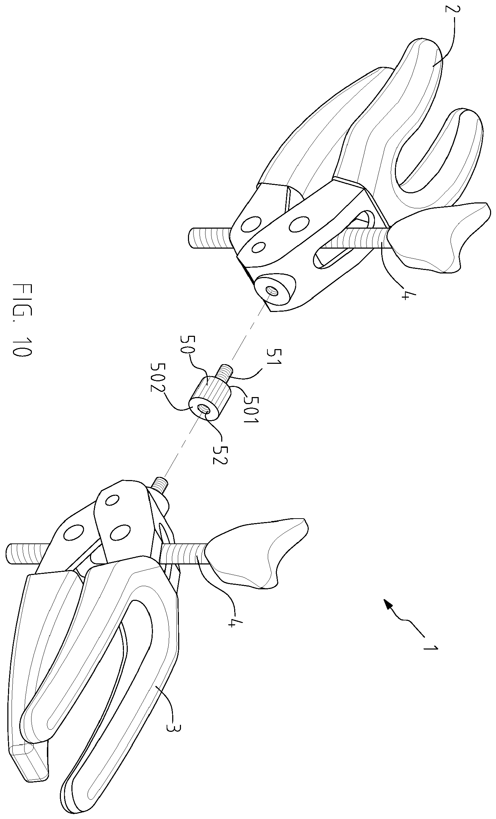

Continuing referring to FIG. 1, the connecting module 5 comprises a connecting unit 50 having two opposite end portions 501 and 502, one of the end portions 501 is provided with a first connecting element 51, and the other end portions 502 is provided with a second connecting element 52. In this embodiment, the first connecting element 51 is connected to the mating portion 23 of the clamping unit 2, and the second connecting element 52 is connected to the mating portion 33 of the opposite clamping unit 3, whereby the clamping units 2 and 3 are rotatable about the connecting unit 50. Specifically, the first connecting element 51 and the second connecting element 52 respectively protrude inward to form a hole-shaped configuration having threads therein, and the mating portions 23 and 33 protrude out of the upper clamping bodies 21 and 31 so as to be screwingly connected to the first and second connecting elements 51 and 52. In another embodiment, the first and second connecting elements 51 and 52 are exemplified by engaging grooves (not shown), and the mating portions 23 and 33 are exemplified by engaging portions (not shown) for engaging with the engaging grooves. Furthermore, as shown in FIG. 10, the first connecting element 51 and the second connecting element 52 both can be exemplified as a male connector or female connector or one male and one female connector, while the mating portion 23 and 33 are correspondingly configured to be connectable to the first and second connecting elements 51 and 52.

The hands-free dual clamp device 1 of the present invention in use, first, rotate the tab of the outer shaft 41, whereby the inner shaft 42 is coaxially rotatable in the sleeve piece 43 of the lower clamping body 22 and 32 in conjunction with rotation of the outer shaft 41, and because the threads 411 and 421 of the outer and inner shafts 41 and 42 spiral in opposite directions, the inner shaft 42 is capable of rapidly coaxially rotating by the rotation of the outer shaft 41, so as to simultaneously drive the lower clamping body 22 and 32 to pivotally rotate towards the claws 211 and 311 of the upper clamping body 21 and 31 (as shown in FIG. 4). In this manner, the size of the clamping space is being rapidly adjusted to fit the external object 6 or 7. Specifically, the sleeve pieces 43 of the upper and lower clamping bodies 21, 31, 22 and 32 are respectively rotatable in the root portions 20 and 30, so that the outer shaft 41 and the inner shaft 42 are capable of swinging with respect to the sleeve pieces 43 when the outer shaft 41 rotates. Particularly, each of the root portions 20 and 30 of the upper clamping body 21 and 31 and the lower clamping body 22 and 32 has a track slot 201 and 301 formed thereon and penetrating the root portion 20 and 30 (as shown in FIGS. 3 and 4). The track slot 201 and 301 are respectively configured to provide a space for the outer shaft 41 and the inner shaft 42 to swing therein. As shown in FIG. 5, the clamping unit 2 clamps the object 7, which is, for example, such as a flange of table or board; the other clamping unit 3 clamps the object 6, which is, for example, a microphone, or in another embodiment, as shown in FIG. 13, the clamping unit 3 clamps the object 6, which is a smart phone.

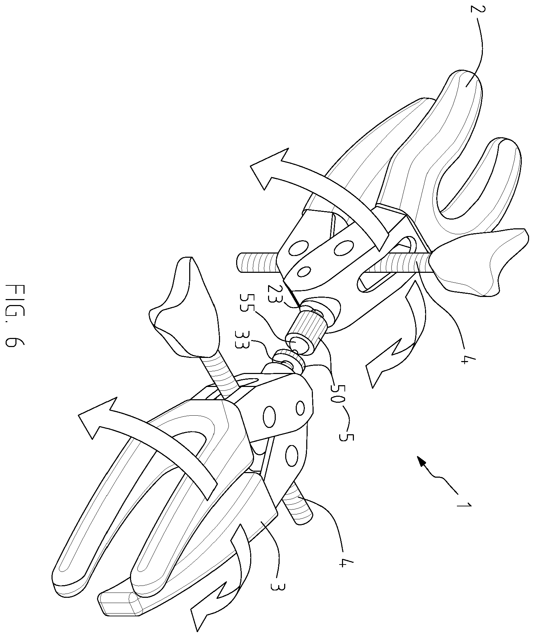

Referring to FIG. 6 showing another embodiment of the connecting module 5 of the present invention, in this embodiment, the connecting module 5 comprises two connecting units 50 and a universal joint 55. The opposite ends of the universal joint 55 respectively connect the two connecting units 50, so as to enable the connecting units 50 to rotate in multiple directions at 360 degrees.

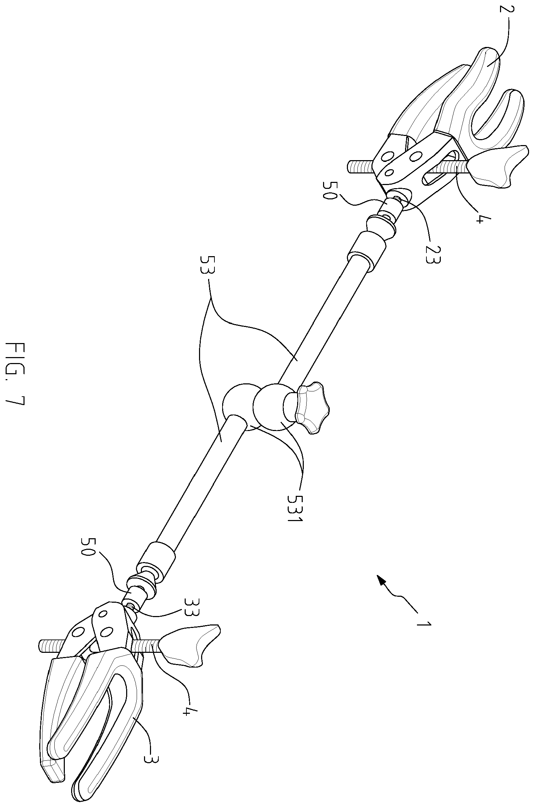

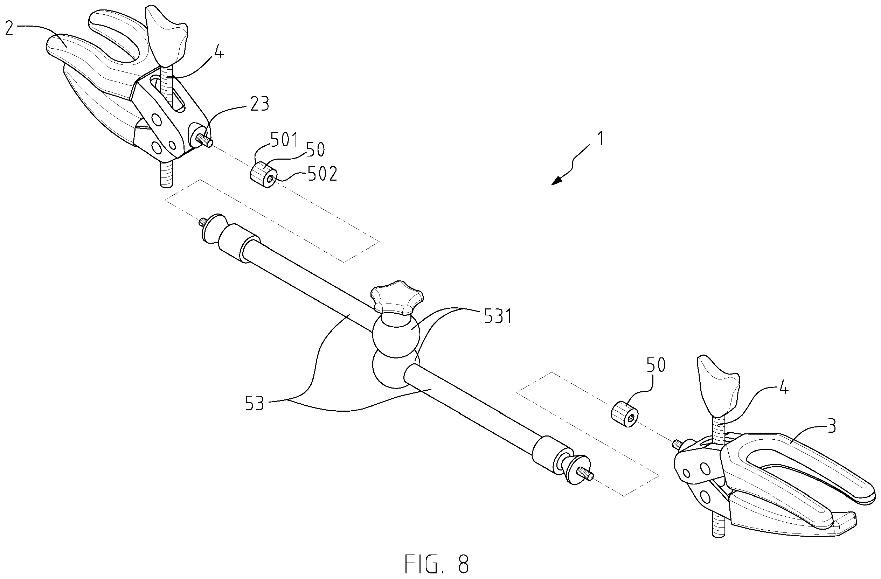

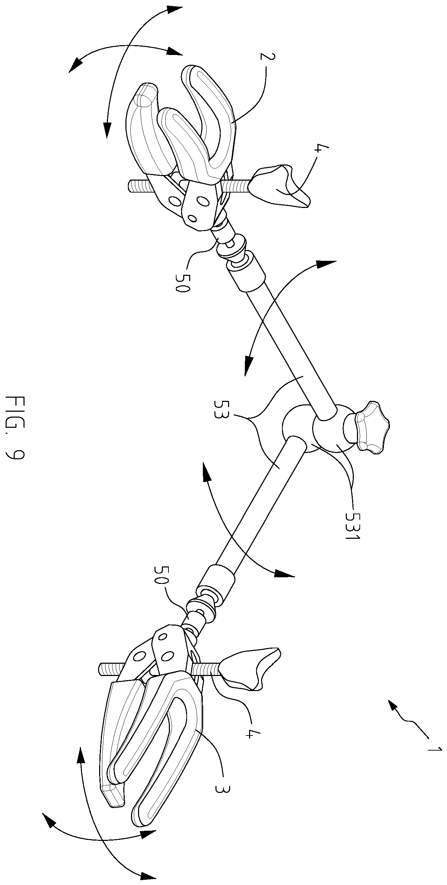

Referring to FIGS. 7 to 9 showing a second embodiment of the present invention, the clamping units 2 and 3 in the second embodiment have the same structural components as the embodiment shown in FIGS. 1-5. In this embodiment, the connecting module 5 comprises two connecting units 50 and an extending rod 53 having two ends to connect the two connecting units 50. More specifically, the extending rod 53 has at least two sections being coupled with a coupling element 531, so as to allow the extending rod 53 to be extendable in length, adjustable at angles, and is bendable.

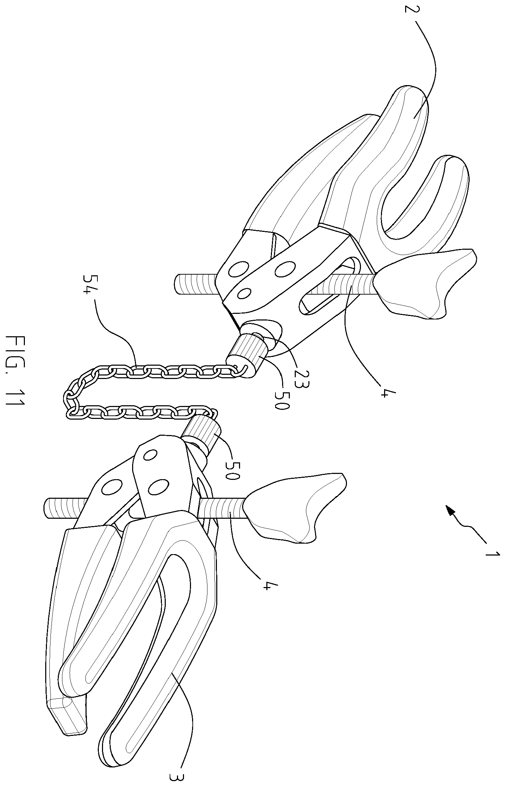

Referring to FIG. 11 showing a third embodiment of the present invention, the clamping units 2 and 3 in the third embodiment have the same structural components as the embodiment shown in FIGS. 1-5. In the third embodiment, the connecting module 5 comprises two connecting units 50 and a chain element 54 for linking the two connecting units 50. In this manner, the clamping units 2 and 3 are also extendable in length and adjustable at angles for convenient usage.

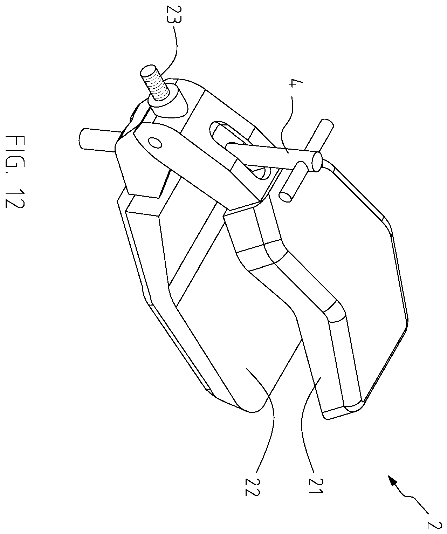

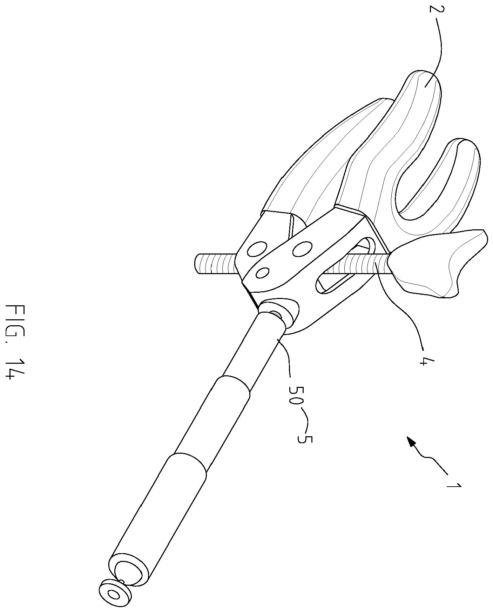

Referring to FIG. 12 showing another embodiment of the clamping unit 2, in this embodiment, the upper clamping body 21 and the lower clamping body 22 respectively have a single claw configuration which provides the same function as that of the two claw configuration as described in the previous embodiments. Referring to FIG. 14 showing another state of use of the present invention, as shown in FIG. 14, there is only the clamping unit 2 connected with the connecting unit 50 of the connecting module 5, while one end of the connecting module 5 is to be hand held, or is to be connected with the clamping unit 3 in alternative. The connecting unit 50 is capable of being telescopically extended or retracted.

Accordingly, the hands-free dual clamp device 1 of the present invention utilizes the connecting module 5 to detachably connect two clamping units 2 and 3 for clamping external objects 6 and 7 (e.g. smart phones, microphones, hangers or boards), where the clamping units 2 and 3 are capable of rotating at various angles so as to enable users to use mobile electronic devices to watch videos or to take a selfie without hand holding the device 1, whereby effectively overcoming the drawbacks of conventional fixing devices which are needed to be hand-held. Furthermore, the claw-type clamping unit 2 and 3 is capable of being adjusted by the shaft module 4 to readily adjust the size of the clamping space for fitting into various shapes of objects and applying secure clamping force thereon, whereby successfully overcoming the drawbacks of conventional fixing devices that utilize springs to provide clamping force which renders the clamping force insufficient, and are incapable of clamping round or irregular shapes of objects. In other words, the hands-free dual clamp device 1 is configured to fulfill the purpose of holding and fixing two objects without the aid of hands to hold the objects or the clamp device 1 such that an additional hand is created for use to effectively securely clamp objects and thus is very convenient to users.

It is understood that the invention may be embodied in other forms within the scope of the claims. Thus the present examples and embodiments are to be considered in all respects as illustrative, and not restrictive, of the invention defined by the claims.

## Claims

1. A hands-free dual clamp device (1), comprising:
two clamping units (2, 3), each of the clamping units (2, 3) comprising an upper clamping body (21, 31), a lower clamping body (22, 32), a mating portion (23, 33) disposed on one end of the upper clamping body (21, 31), and a shaft module (4), one end of the lower clamping body (22, 32) pivotally connected to the one end of the upper clamping body (21, 31), the shaft module (4) spirally inserted through the upper and lower clamping bodies (21, 31, 22, 32) and being rotatable, so as to enable the upper and lower clamping bodies (21, 31, 22, 32) to be adjustable at angles with respect to each other and cooperatively form a clamping space for clamping an external object (6, 7); and
a connecting module (5) comprising at least a connecting unit (50) having two opposite end portions (501, 502), one of the end portions (501) provided with a first connecting element (51), the other end portion (502) provided with a second connecting element (52), wherein each of the first and second connecting element (51, 52) has threads to be screwingly connected to a corresponding one of the mating portions (23, 33) on the upper clamping bodies (21, 31), the first connecting element (51) connected to the mating portion (23) of one of the clamping units (2), and the second connecting element (52) connected to the mating portion (33) of the other one of the clamping units (3), so that the two clamping units (2, 3) are linked together with the connecting module (5).

2. The hands-free dual clamp device (1) of claim 1, wherein the upper clamping body (21, 31) and the lower clamping body (22, 32) respectively define a root portion (20, 30) located adjacent to the mating portion (23, 33), the shaft module (4) comprises an outer shaft (41), an inner shaft (42), and two sleeve pieces (43) respectively disposed in the root portions (20, 30) of the upper and lower clamping bodies (21, 31, 22, 32), the outer and inner shafts (41, 42) respectively form threads (411,421), the outer shaft (41) is spirally connected with the sleeve piece (43) of the upper clamping body (21, 31), and a part of the inner shaft (42) is spirally engaged into the outer shaft (41), and another part of the inner shaft (42) is spirally connected with the sleeve piece (43) of the lower clamping body (22, 32).

3. The hands-free dual clamp device (1) of claim 2, wherein the threads (411) of the outer shaft (41) spiral in a direction opposite to that of the inner shaft (42), and the inner shaft (42) is coaxially rotatable in the sleeve piece (43) of the lower clamping body (22, 32) in conjunction with rotation of the outer shaft (41).

4. The hands-free dual clamp device (1) of claim 2, wherein at least one of the upper clamping bodies (21, 31) comprises two claws (211, 311) extending from the root portion (20, 30) and being spaced apart to form an interval (212, 312), and the corresponding lower clamping body (22, 32) is capable of being adjusted by the shaft module (4) to move into the interval (212, 312).

5. The hands-free dual clamp device (1) of claim 2, wherein the sleeve pieces (43) of the upper and lower clamping bodies (21, 31, 22, 32) are rotatable in the root portions (20, 30), so that the outer shaft (41) and the inner shaft (42) are capable of swinging with respect to the sleeve pieces (43) when the outer shaft (41) rotates, whereby adjusting a size of the clamping space between the upper and lower clamping bodies (21, 31,22, 32).

6. The hands-free dual clamp device (1) of claim 5, wherein each of the root portions (20, 30) of the upper clamping body (21, 31) and the lower clamping body (22, 32) has a track slot (201, 301) formed thereon and penetrating the root portion (20, 30), and the track slots (201, 301) are respectively configured to provide a space for the outer shaft (41) and the inner shaft (42) to swing therein.

7. The hands-free dual clamp device (1) of claim 1, wherein the connecting module (5) comprises the two connecting units (50) and an extending rod (53) having two ends to connect the two connecting units (50), and the extending rod (53) is extendable in length, adjustable at angles, and is bendable.

8. The hands-free dual clamp device (1) of claim 1, wherein the connecting module (5) comprises two connecting units (50) and a chain element (54) for linking the two connecting units (50).

9. The hands-free dual clamp device (1) of claim 1, wherein the first connecting element (51) and the second connecting element (52) respectively protrude inward to form a hole-shaped configuration, and the mating portions (23, 33) of the two clamping units (2, 3) protrude out of the upper clamping bodies (21, 31) to be connected to the first and second connecting elements (51, 52).

10. The hands-free dual clamp device (1) of claim 1, wherein the connecting module (5) comprises the two connecting units (50) and a universal joint (55) which connects the two connecting units (50).

## Patentansprüche

1. Freihanddoppelklemmvorrichtung (1), die Folgendes umfasst:
zwei Klemmeinheiten (2, 3), wobei jede der Klemmeinheiten (2, 3) einen oberen Klemmkörper (21, 31), einen unteren Klemmkörper (22, 32), einen an einem Ende des oberen Klemmkörpers (21, 31) angeordneten Passabschnitt (23, 33) und ein Schaftmodul (4) umfasst, wobei ein Ende des unteren Klemmkörpers (22, 32) schwenkbar mit dem einen Ende des oberen Klemmkörpers (21, 31) verbunden ist, das Schaftmodul (4) schraubenförmig durch den oberen und unteren Klemmkörper (21, 31, 22, 32) eingesetzt wird und drehbar ist, sodass der obere und untere Klemmkörper (21, 31, 22, 32) in Bezug aufeinander in Winkeln einstellbar sind und zusammenwirkend einen Klemmraum zum Einklemmen eines externen Gegenstands (6, 7) bilden, und
ein Verbindungsmodul (5), umfassend mindestens eine Verbindungseinheit (50) mit zwei gegenüberliegenden Endabschnitten (501, 502), wobei einer der Endabschnitte (501) mit einem ersten Verbindungselement (51) versehen ist, wobei der andere Endabschnitt (502) mit einem zweiten Verbindungselement (52) versehen ist, wobei jedes der ersten und zweiten Verbindungselemente (51, 52) Gewinde aufweist, um gewindemäßig mit einem Entsprechenden der Passabschnitte (23, 33) an den oberen Klemmkörpern (21, 31) verbunden zu werden, wobei das erste Verbindungselement (51) mit dem Passabschnitt (23) einer der Klemmeinheiten (2) verbunden ist und das zweite Verbindungselement (52) mit dem Passabschnitt (33) der anderen der Klemmeinheiten (3) verbunden ist, sodass die zwei Klemmeinheiten (2, 3) mit dem Verbindungsmodul (5) verknüpft sind.

2. Freihanddoppelklemmvorrichtung (1) nach Anspruch 1, bei der der obere Klemmkörper (21, 31) und der untere Klemmkörper (22, 32) jeweils einen Wurzelabschnitt (20, 30) definieren, der sich dem Passabschnitt (23, 33) benachbart befindet, das Schaftmodul (4) einen Außenschaft (41), einen Innenschaft (42) und zwei Muffenstücke (43) umfasst, die jeweils in den Wurzelabschnitten (20, 30) des oberen und unteren Klemmkörpers (21, 31, 22, 32) angeordnet sind, wobei der Außen- und Innenschaft (41, 42) jeweils Gewinde (411, 421) bilden, wobei der Außenschaft (41) schraubenförmig mit dem Muffenstück (43) des oberen Klemmkörpers (21, 31) verbunden ist und ein Teil des Innenschafts (42) schraubenförmig in den Außenschaft (41) eingreift und ein anderer Teil des Innenschafts (42) schraubenförmig mit dem Muffenstück (43) des unteren Klemmkörpers (22, 32) verbunden ist.

3. Freihanddoppelklemmvorrichtung (1) nach Anspruch 2, bei der die Gewinde (411) des Außenschafts (41) in einer dem Innenschaft (42) entgegengesetzten Richtung geschraubt werden und der Innenschaft (42) in dem Muffenstück (43) des unteren Klemmkörpers (22, 32) in Verbindung mit einer Drehung des Außenschafts (41) koaxial drehbar ist.

4. Freihanddoppelklemmvorrichtung (1) nach Anspruch 2, bei der mindestens einer der oberen Klemmkörper (21, 31) zwei Klauen (211, 311) umfasst, die sich von dem Wurzelabschnitt (20, 30) erstrecken und voneinander beabstandet sind, um einen Zwischenraum (212, 312) zu bilden, und der entsprechende untere Klemmkörper (22, 32) durch das Schaftmodul (4) einstellbar ist, um sich in den Zwischenraum (212, 312) zu bewegen.

5. Freihanddoppelklemmvorrichtung (1) nach Anspruch 2, bei der die Muffenstücke (43) des oberen und unteren Klemmkörpers (21, 31, 22, 32) in den Wurzelabschnitten (20, 30) drehbar sind, sodass der Außenschaft (41) und der Innenschaft (42) in Bezug auf die Muffenstücke (43) schwingen können, wenn sich der Außenschaft (41) dreht, wodurch eine Größe des Klemmraums zwischen dem oberen und dem unteren Klemmkörper (21, 31, 22, 32) eingestellt wird.

6. Freihanddoppelklemmvorrichtung (1) nach Anspruch 5, bei der jeder der Wurzelabschnitte (20, 30) des oberen Klemmkörpers (21, 31) und des unteren Klemmkörpers (22, 32) einen darauf gebildeten und in den Wurzelabschnitt (20, 30) eindringenden Spurschlitz (201, 301) aufweist und die Spurschlitze (201, 301) jeweils dazu konfiguriert sind, einen Raum bereitzustellen, in dem der Außenschaft (41) und der Innenschaft (42) schwingen können.

7. Freihanddoppelklemmvorrichtung (1) nach Anspruch 1, bei der das Verbindungsmodul (5) die zwei Verbindungseinheiten (50) und eine sich erstreckende Stange (53) mit zwei Enden zum Verbinden der zwei Verbindungseinheiten (50) umfasst und die sich erstreckende Stange (53) in der Länge erweiterbar, in Winkeln einstellbar und biegbar ist.

8. Freihanddoppelklemmvorrichtung (1) nach Anspruch 1, bei der das Verbindungsmodul (5) zwei Verbindungseinheiten (50) und ein Kettenelement (54) zum Verknüpfen der zwei Verbindungseinheiten (50) umfasst.

9. Freihanddoppelklemmvorrichtung (1) nach Anspruch 1, bei der das erste Verbindungselement (51) und das zweite Verbindungselement (52) jeweils nach innen vorstehen, um eine lochförmige Konfiguration zu bilden, und die Passabschnitte (23, 33) der beiden Klemmeinheiten (2, 3) von den oberen Klemmkörpern (21, 31) vorstehen, um mit dem ersten und zweiten Verbindungselement (51, 52) verbunden zu werden.

10. Freihanddoppelklemmvorrichtung (1) nach Anspruch 1, bei der das Verbindungsmodul (5) die zwei Verbindungseinheiten (50) und ein Universalgelenk (55) umfasst, das die zwei Verbindungseinheiten (50) verbindet.

## Revendications

1. Dispositif de pince double mains libres (1), comprenant:
deux unités de serrage (2, 3), chacune des unités de serrage (2, 3) comprenant un corps de serrage supérieur (21, 31), un corps de serrage inférieur (22, 32), une partie d'accouplement (23, 33) disposée sur une extrémité du corps de serrage supérieur (21, 31) et un module de tige (4), une extrémité du corps de serrage inférieur (22, 32) étant raccordée de manière pivotante à l'extrémité du corps de serrage supérieur (21, 31), le module de tige (4) étant inséré en spirale à travers les corps de serrage supérieur et inférieur (21, 31, 22, 32) et étant rotatif, de sorte à permettre aux corps de serrage supérieur et inférieur (21, 31, 22, 32) de pouvoir être réglés en formant des angles l'un par rapport à l'autre et de former en collaboration un espace de serrage pour serrer un objet externe (6, 7); et
un module de raccordement (5) comprenant au moins une unité de raccordement (50) ayant deux parties d'extrémité opposées (501, 502), l'une des parties d'extrémité (501) dotée d'un premier élément de raccordement (51), l'autre partie d'extrémité (502) dotée d'un second élément de raccordement (52), dans lequel chacun du premier et second élément de raccordement (51, 52) présente des filetages pour être raccordé par vissage à une partie correspondante parmi les parties d'accouplement (23, 33) sur les corps de serrage supérieurs (21, 31), le premier élément de raccordement (51) étant raccordé à la partie d'accouplement (23) d'une des unités de serrage (2), et le second élément de raccordement (52) étant raccordé à la partie d'accouplement (33) de l'autre parmi les unités de serrage (3), de sorte que les deux unités de serrage (2, 3) sont liées avec le module de raccordement (5).

2. Dispositif de pince double mains libres (1) selon la revendication 1, dans lequel le corps de serrage supérieur (21, 31) et le corps de serrage inférieur (22, 32) définissent respectivement une partie de base (20, 30) placée de manière adjacente à la partie d'accouplement (23, 33), le module de tige (4) comprend une tige externe (41), une tige interne (42), et deux pièces formant manchon (43) disposées respectivement dans les parties de base (20, 30) des corps de serrage supérieur et inférieur (21, 31, 22, 32), les tiges externe et interne (41, 42) forment respectivement des filetages (411, 421), la tige externe (41) est raccordée en spirale avec la pièce formant manchon (43) du corps de serrage supérieur (21, 31), et une partie de la tige interne (42) est en prise en spirale dans la tige externe (41), et une autre partie de la tige interne (42) est raccordée en spirale avec la pièce de douille (43) du corps de serrage inférieur (22, 32).

3. Dispositif de pince double mains libres (1) selon la revendication 2, dans lequel les filetages (411) de la tige externe (41) forment une spirale dans une direction opposée à celle de la tige interne (42), et la tige interne (42) peut tourner de manière coaxiale dans la pièce formant manchon (43) du corps de serrage inférieur (22, 32) conjointement avec la rotation de la tige externe (41).

4. Dispositif de pince double mains libres (1) selon la revendication 2, dans lequel au moins un des corps de serrage supérieur (21, 31) comprend deux griffes (211, 311) s'étendant depuis la partie de base (20, 30) et étant espacées pour former un intervalle (212, 312), et le corps de serrage inférieur correspondant (22, 32) est capable d'être réglé par le module de tige (4) pour se déplacer dans l'intervalle (212, 312).

5. Dispositif de pince double mains libres (1) selon la revendication 2, dans lequel les pièces formant manchon (43) des corps de serrage supérieur et inférieur (21, 31, 22, 32) peuvent tourner dans les parties de base (20, 30), de telle sorte que la tige externe (41) et la tige interne (42) sont aptes à pivoter par rapport aux pièces formant manchon (43) lorsque la tige externe (41) tourne, réglant ainsi une taille de l'espace de serrage entre les corps de serrage supérieur et inférieur (21, 31, 22, 32).

6. Dispositif de pince double mains libres (1) selon la revendication 5, dans lequel chacune des parties de base (20, 30) du corps de serrage supérieur (21, 31) et du corps de serrage inférieur (22, 32) présente une saignée (201, 301) formée sur ceux-ci et pénétrant dans la partie de base (20, 30), et les saignées (201, 301) sont configurées respectivement pour fournir un espace pour que la tige externe (41) et la tige interne (42) pivotent à l'intérieur.

7. Dispositif de pince double mains libres (1) selon la revendication 1, dans lequel le module de raccordement (5) comprend les deux unités de raccordement (50) et une barre d'extension (53) ayant deux extrémités pour raccorder les deux unités de raccordement (50), et la barre d'extension (53) est extensible en longueur, réglable angulairement et peut être pliée.

8. Dispositif de pince double mains libres (1) selon la revendication 1, dans lequel le module de raccordement (5) comprend deux unités de raccordement (50) et un élément de chaîne (54) pour lier les deux unités de raccordement (50).

9. Dispositif de pince double mains libres (1) selon la revendication 1, dans lequel le premier élément de raccordement (51) et le second élément de raccordement (52) font saillie respectivement vers l'intérieur pour former une configuration en forme de trou, et les parties d'accouplement (23, 33) des deux unités de serrage (2, 3) font saillie hors des corps de serrage supérieurs (21, 31) pour être raccordées aux premier et second éléments de raccordement (51, 52).

10. Dispositif de pince double mains libres (1) selon la revendication 1, dans lequel le module de raccordement (5) comprend les deux unités de raccordement (50) et un joint universel (55) qui raccorde les deux unités de raccordement (50).
